# EUROPEAN PATENT APPLICATION

(11) **EP 3 633 580 A1**
(43) Date of publication of application: **08.04.2020**
(21) Application number: 18198428.7
(22) Date of filing: 03.10.2018
(51) Int. Cl.: G06Q 30/02

(54) **METHOD AND DEVICE TO SECURE DISPLAY OF ONLINE ADVERTISEMENTS ON A USER DEVICE**

(71) Applicant: VERIMATRIX, 13590 Meyreuil (FR)
(72) Inventor: Nikolic, Sasha, 1031 KP Amsterdam (NL); SHUTOVSKYI, Vasyl, 1013 JV Amsterdam (NL); NGALLE, Cyrille, 13590 Meyreuil (FR)
(74) Representative: de Roquemaurel, Bruno

(57) **Abstract**

The invention relates to a method for securing access from a computing device to media content available in a network (NT), the method comprising executing by a computing device (UDV) a dedicated player software application (DPL) to access the media content, the execution of the player software application comprising: generating a content request to access a media content, the request containing a domain name of a content server (ADSV) providing the media content; resolving the network domain name to determine a network address corresponding to the network domain name of the content server; modifying the content request by replacing the domain name with the network address; and providing the modified content request to transmit it to the content server. According to an embodiment, the resolution of the network domain name by the player software application (DPL) is performed using a resolving table defined in the player software application, or is performed using a protected transmission link with a first resolving server (DNS1) defined in the player software application (DPL).

## Description

### TECHNICAL FIELD

The present invention relates to online advertisement and more particularly, to systems and methods counteracting online advertisement.

### BACKGROUND

Online advertising is an important revenue source for many publishers of online content. Online advertising is also an important means through which different entities, products, and services generate goodwill, brand recognition, and customer loyalty as well as promote and disseminate information about those entities, products, and services.

Online advertisement may be displayed, without limitation, in the form of banner, pop-up, embedded, in-line, interstitial, and full page canvas advertisements that are presented when a user accesses a web page, navigates away from a web page, closes a web page, is directed to a web page or an advertisement or otherwise uses a player that plays an audio or video content. The advertisements can be provided as links, audio content, or visual content including text, images, and other multimedia content.

Advertisements may be displayed in the form of text areas, still images, animated images, or even videos embedded in web pages. When a member of the advertising audience (referred to as a "viewer" or "user" without loss of generality) selects one of these ads by clicking on it, embedded hypertext links typically direct the viewer to the advertiser's web site ("click-through process).

In recent years, ad-blocking technology has become increasingly popular, as some users wish to access and consume online content for free without seeing the advertisements that are also present on those web pages. Part of the motivation may be due to certain websites utilizing too many ads, or intrusive types of ads that overwhelm the other content on the page or cause issues such as slow page load times. Taken as a whole, the increased use of ad-blockers severely disrupts the advertising and publishing industry by preventing online advertisements from being shown and consequently taking revenues away from online publishers, making it increasingly difficult for those publishers to continue offering content for free. Ad-blockers may be in the form of browser extensions, browser settings, antivirus programs, and router add-ons.

In contrast, it appears that there are very few technical solutions available to secure the display of advertisement. A known approach consists in URL address scrambling techniques, in order to bypass URLs blacklists. This solution is not always efficient because of the reactivity of possible collaborative filtering (like peer-based anti-spam techniques). The use of randomized addresses also induces limitations (learning capabilities). Some websites detect ad-blocking add-ons installed on browsers, and then, they can refuse to serve the client. However the detection of ad-blocking add-ons relies on bugs that are progressively fixed and ad-blockers implement work-around for these bugs. Aside these common technical approaches, there are only non-technical methods. For example, permission marketing methods are tested (indeed, users may target ads instead of ads targeting users), but these methods do not apply well to mass markets. Other methods based on users profiling are tried by advertisers or their partners to deliver better perceived forms of advertisements, but it poses privacy threats. If no reliable solution emerges to secure the display of advertisements, advertising formats may evolve to these contextual, interactive, permission-based and targeted messaging to retain attention of the consumers and to help minimize both irritation and "tuning out." A few content or service providers also warn their users on loss of revenue resulting from the use of ad-blocking techniques.

Most of ad-blockers are operating as a local VPN (Virtual Private Network) server to perform a man-in-the-middle attack so as to intercept all DNS (Domain Name System) resolving requests and/or HTTP-S (HyperText Transfer Protocol -Secure) requests, and block those related to IP (Internet Protocol) addresses registered in blacklists. The ad-blocker is installed as a local VPN on the client to intercept all HTTP or HTTPS requests. When a client transmits a request in order to get a web page, the ad-blocker checks if the request is intended for a server domain name referenced in a blacklist as an advertisement provider. If so, the ad-blocker does not transmit the request to the server and the request fails. When the server domain name in the request is not referenced in the blacklist, the ad-blocker transmits the request to an HTTPS service implementing the HTTPS protocol in the client. The HTTPS service generates another request to call the server corresponding to the requested web page. The ad-blocker will again intercept the request, read the request payload and use the blacklist to match the request payload, and then block the request if the request payload matches the blacklist, or otherwise transmit the request to the server.

Therefore, there is a need to distribute audio or video content including advertisement content, while preventing ad-blockers from removing advertisement from or blocking these contents.

### SUMMARY

A method is described for securing access from a computing device to media content available in a network. The method may include executing by a computing device a dedicated player software application to access the media content, the execution of the player software application comprising: generating a content request to access a media content, the request containing a domain name of a content server providing the media content; resolving the network domain name to determine a network address corresponding to the network domain name of the content server; modifying the content request by replacing the domain name with the network address; and providing the modified content request to transmit it to the content server, wherein the resolution of the network domain name by the player software application is performed using a resolving table defined in the player software application, or comprises: establishing a first protected transmission link with a first resolving server defined in the player software application, using a list of trusted root certificates defined in the player software application; transmitting a first resolving request containing the network domain name, through the first protected link to the first resolving server; and receiving a first resolving response to the first resolving request through the first protected transmission link.

According to an embodiment, when no network address corresponding to the network domain name is found in the resolving table, the execution of the player software application further comprises: establishing the first protected transmission link with the first resolving server, using the list of trusted root certificates; transmitting the first resolving request through the first protected transmission link to the first resolving server; and receiving the first resolving response to the first resolving request through the first protected transmission link.

According to an embodiment, when the resolving table or the first resolving response contains the network address of the content server, the execution of the player software application further comprising: establishing a second protected transmission link with the content server, using the list of trusted root certificates and the network address of the content server; and transmitting the modified content request to the content server through the second protected transmission link established with the content server.

According to an embodiment, the execution of the player software application further comprises receiving a requested content from the content server in response to the modified content request.

According to an embodiment, the execution of the player software application further comprises resolving a network domain name of the first resolving server to get a corresponding network address of the first resolving server, the resolution of the network domain name of the first resolving server being performed using the resolving table, or comprising: transmitting a second resolving request containing the network domain name of the first resolving server to a second resolving server; and receiving a second resolving response to the second resolving request.

According to an embodiment, the execution of the player software application further comprises detecting an ad-blocking software installed on the computing device, and operating as a conventional player when no ad-blocking software is detected on the computing device.

According to an embodiment, the first and/or second protected transmission links are established using the protocol SSL and/or TLV.

Embodiments may also relate to a computing device connected to a network for accessing media contents provided by remote servers, and having installed thereon a dedicated player configured to implement the steps of the method as above-defined.

According to an embodiment, the dedicated player comprises a domain name resolving module.

According to an embodiment, the dedicated player comprises a module storing a list of trusted root certificates and configured to establish a protected link with a remote server.

According to an embodiment, the dedicated player comprises a module for enabling the dedicated player to access protected media contents.

Embodiments may also relate to a computer program product directly loadable into an internal memory of a computer and comprising code portions which when executed by a computer connected to a network, configure the computer to implement the steps of the method as above-defined.

### BRIEF DESCRIPTION OF THE DRAWINGS

The method and/or device may be better understood with reference to the following drawings and description. Non-limiting and non-exhaustive descriptions are described with the following drawings. In the figures, like referenced signs may refer to like parts throughout the different figures unless otherwise specified.
Figure 1 is a sequential diagram showing steps performed by a classical ad-blocker for blocking web content including advertisement;
Figure 2 is a sequential diagram showing steps for preventing an ad-blocker to operate, according to an embodiment;
Figure 3 is a sequential diagram showing steps for preventing an ad-blocker to operate, according to another embodiment,
Figure 4 is a block diagram of a media player according to an embodiment,
Figure 5 is a block diagram of user devices gaining access to contents and services from remote servers.

### DETAILED DESCRIPTION

Methods, systems and apparatuses are described herein for bypassing ad-blocking techniques.

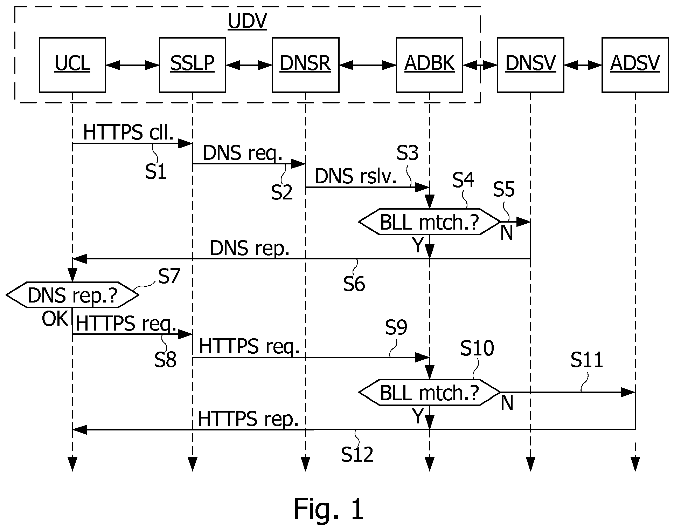

Figure 1 illustrates steps S1 to S12 performed by a classical ad-blocker for blocking web content including advertisement, requested by a user device UDV connected to a server ADSV providing advertisement via a network such as Internet. The user device UDV executes a user client UCL such as a web browser or an audio or video player. To prevent advertisement from being displayed, the user device UDV further executes an ad-blocker ADBK. The user device also executes SSL and DNS services SSLP, DNSR, to implement the protocol SSL (Secure Sockets Layer) and/or TLV (Transport Layer Security), and to resolve DNS requests. The ad-blocker ADBK operates as a local VPN server performing a man-in-the-middle attack so as to intercept all DNS (Domain Name System) resolving requests and/or HTTP or HTTPS requests. The ad-blocker ADBK can also operate from a proxy server or a router used by the user device UDV to access the network.

In step S1, the user client UCL transmits an HTTP or HTTPS request, for example in the form GET URL with URL = "https://<domain name>/<parameters>". This request is processed by the SSL service which analyses the request to determine whether it includes a domain name to be resolved. If the request includes a domain name to be resolved, the SSL service transmits the request to the DNS resolver service DNSR including the domain name to resolve, in step S2. In step S3, the DNS resolver service DNSR does not have the network address (for example the Internet Protocol -IP- address) corresponding to the domain name, and transmits a DNS request containing the domain name to resolve to a DNS server DNSV in the network. In step S4, the DNS request is intercepted by the ad-blocker ADBK acting as a local VPN server and which determines whether the domain name to resolve belongs to a blacklist of domain names of servers known as providing advertisement. This blacklist is for example updated periodically. If the domain name to resolve does not belong to the blacklist, the ad-blocker ADBK transmits the DNS request to the server DNSV in step S5, otherwise, the ad-blocker ADBK transmits a DNS response including a DNS error message, in step S6. When the DNS server DNSV receives a DNS request, it tries to resolve the domain name in the DNS request by looking in a DNS table for a network address corresponding to the domain name. In step S6, the DNS server DNSV returns a DNS response including either the found network address, or a DNS error message.

In step S7, the user client UCL receives the DNS response, and if the latter contains the requested network address, the user client performs steps S8 to S12. When an error message is received in step S6, the user client UCL cannot access the server ADSV. In step S8, the user client UCL transmits an HTTPS request containing the network address received in step S6. The HTTPS request is processed by the SSL service SSLP which initiates SSL handshake with the server ADSV according to the SSL or TLV protocol, by requesting the server signature and certificate. The ad-blocker ADBK has its own certificate installed in the list of trusted root certificates used by the local SSL service SSLP. Therefore, it can perform man-in-the-middle attack by providing its own certificate to the user client UCL instead of the certificate of the server ADSV, and by establishing a protected or encrypted link (SSL or TLV link) with both the server ADSV and the user client UCL. Thus the ad-blocker ADBK can proxy communications with the server ADSV and read all communications between the latter and the user client UCL. When the SSL service SSLP transmits the HTTPS request from the user client UCL to the server ADSV, in step S9, it is intercepted by the ad-blocker in step S10. In this step, the ad-blocker ADBK looks in a blacklist for the parameters in the HTTPS request. These parameters may also contain a domain name. If the parameters in the HTTPS request are not found in the blacklist, the ad-blocker ADBK transmits the HTTPS request to the server ADSV in step S11, otherwise, the ad-blocker ADBK transmits an HTTPS response including an error message, in step S12. If the HTTPS request is relayed up to the server ADSV, the latter returns the web content requested in the HTTPS request if it is found, otherwise the network or the server ADSV returns an error message in step S12. Thus, in step S12, the user client UCL receives the requested web content or an error message indicating that the requested content is not found, either from the server ADSV, the ad-blocker ADBK, or the network (a network management server). If the requested content is not found, the user client UCL merely skips displaying this content.

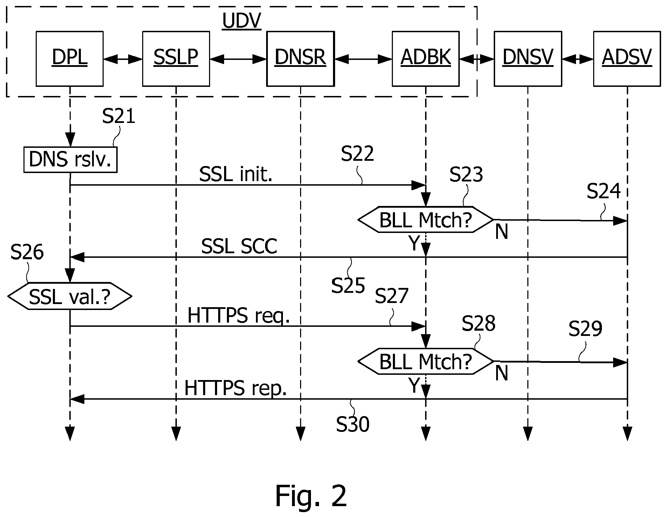

Figure 2 illustrates steps S21 to S30 triggered by the user device UDV to prevent the ad-blocker ADBK to operate, according to an embodiment. Here the user client is a dedicated media player DPL. The user device UDV also executes the ad-blocker ADBK, and the SSL and DNS services SSLP, DNSR, to implement the protocol SSL and/or TLV (Transport Layer Security), and to process DNS requests. Again, the ad-blocker ADBK operates as a local VPN server performing a man-in-the-middle attack so as to intercept all DNS resolving requests and/or HTTP or HTTPS requests. The ad-blocker ADBK can also operate from a proxy server or a router used by the user device UDV to access the network. According to an embodiment, the player DPL includes an embedded DNS resolver using its own DNS table, and possibly an embedded SSL client implementing the protocols SSL and/or TLV.

In step S21, the player DPL transmits an HTTP or HTTPS request, for example in the form GET URL with URL = "https://<domain name>/<parameters>". This request is first processed by the embedded DNS resolver in order to get the network address of the server ADSV corresponding to the domain name contained in the HTTP request. In this manner, the ad-blocker ADBK cannot block the DNS resolving operation.

In step S22, the network address provided by the embedded DNS resolver is further processed by the embedded SSL service which opens a SSL socket port (e.g. 443) and initiates SSL handshake with the server ADSV according to the SSL or TLV protocol, by requesting the server signature and certificate. This request is intercepted by the ad-blocker ADBK in step S23. However the latter is not able to perform a man-in-the-middle attack since the embedded SSL service uses its own list of trusted root certificates and since the root certificate of the ad-blocker ADBK is not in this list of trusted root certificates.

Therefore the ad-blocker ADBK which acts as a local VPN is only able to read the public network address and initial SSL handshake which are transmitted between the player DPL and the server ADSV, before the SSL protected connection is established between the latter. As being unable to get the server domain name and the parameters of the HTTPS request, it cannot perform the blacklist checking operation (step S23). Therefore, the ad-blocker is unable to block the received TCP request from the player DPL to the server ADSV (step S24). According to the SSL protocol, the server ADSV processes the received TCP request by transmitting its signature and certificate in response to the TCP request, in step S25. These data are received in step S26 by the player DPL which checks using these data whether the server is trusted. To this purpose, the player DPL uses its embedded list of trusted root certificates instead of getting them from the local SSL service SSLP.

If the verification performed in step S26 succeeds, the embedded SSL module performs the following steps S27 to S30, otherwise the embedded SSL module returns an error message to the player DPL. In step S27, a protected link is established between the server ADSV and the player DPL, and the latter transmits an HTTPS request to the server ADSV through this link. This request is again intercepted by the ad-blocker ADBK in step S28, but the content of the request (query string parameters, HTTP header request) is encrypted, such that the ad-blocker ADBK is unable to check whether the request is directed to a forbidden domain name. Therefore, the ad-blocker ABDK transmits the request to the server ADSV in step S29. In step S30, the server ADSV provides the content corresponding to the HTTPS request.

Therefore, the verifications performed in steps S23 and S28 (or S4 and S10) by the ad-blocker ADBK are systematically made inoperative.

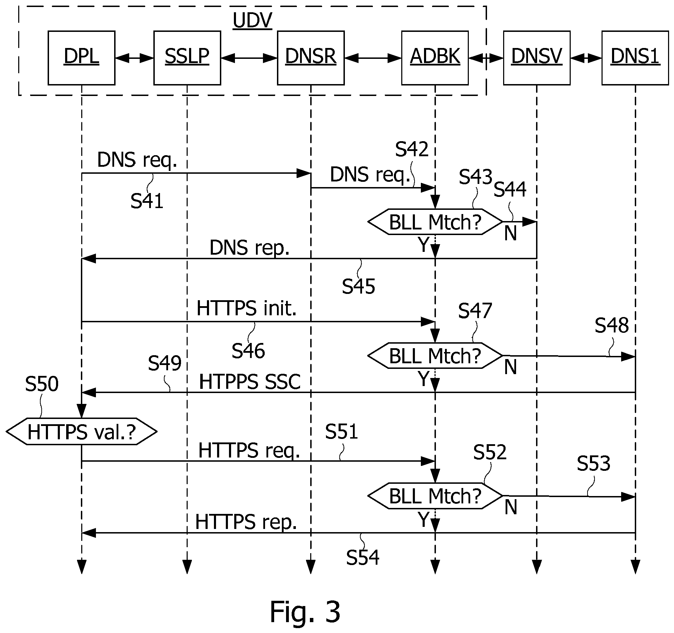

Figure 3 illustrates steps S41 to S45 triggered by the user device UDV to prevent the ad-blocker ADBK to operate, according to another embodiment. In this embodiment, the DNS resolver of the player DPL cannot resolve alone the domain name of the HTTPS request and therefore, requests a public DNS resolving server, such as the server DNSV. In step S41, the embedded DNS resolver of the player DPL constructs and transmits a DNS request containing the domain name of a DNS server DNS1 in order to get the network address of the latter. In step S42, this request is processed by the local DNS service DNSR. In this step, the service DNSR does not know the network address of the DNS server DNS1 and send the DNS request to a DNS server on the network, for example the DNS server DNSV. In step S43, the ad-blocker ADBK acting as a local VPN server reads the DNS request. In step S44, since the DNS request only contains a domain name of a DNS server (DNS1) which is not referenced as an advertisement server in its blacklist, the ad-blocker ADBK transmits the DNS request to the server DNSV chosen by the DNS service DNSR. In step S45, the server DNSV responds to the received DNS request by providing the network address of the DNS server DNS1 to the embedded DNS resolver of the player DPL.

The steps S41 to S45 can also be replaced by a single step (as S21), performed by the embedded DNS resolver using the DNS table of the dedicated media player DPL, to get the network address of the DNS server DNS1.

In step S46, the embedded SSL module of the player DPL open the SSL socket port and initiates a SSL handshake with the DNS server DNS1, using the network address received in step S45 and the list of the trusted root certificates of the embedded SSL module, to get the certificate of the server DNS1. In step S47, the ad-blocker ADBK cannot perform the man-in-the-middle attack since its certificate is not in the used list of trusted root certificates. Therefore, the ad-blocker ADBK can only see the network address of the DNS server DNS1 and data exchanged during the initial SSL handshake. Since the visible data transmitted by the embedded SSL module do not match the blacklist, the ad-blocker ADBK does not block the received TCP request to the server DNS1 (step S48). According to the SSL protocol, the server DNS1 processes the received TCP request by transmitting its signature and certificate in response to the TCP request, in step S49. These data are received in step S50 by the player DPL which checks using these data whether the server DNS1 is trusted. To this purpose, the player DPL uses its embedded list of trusted root certificates instead of getting them from the local HTTPS service SSLP.

If the verification performed in step S50 succeeds, the embedded HTTPS module performs the following steps S51 to S54, otherwise it returns an error message to the player DPL. In step S51, a SSL protected link is activated with the server DNS1. Then the embedded DNS resolver of the player DPL transmits a DNS over HTTPS request containing the domain name of the server ADSV, to the server DNS1 through this link to get the network address of the server ADSV. This request is again intercepted by the ad-blocker ADBK in step S52, but the content of the request (in particular the domain name of the server ADSV) is encrypted, such that the ad-blocker ADBK is unable to check whether the request is directed to advertising using its blacklist. Therefore, the ad-blocker ABDK transmits the request to the server DNS1 in step S53. In step S54, the server DNS1 provides the network address corresponding to the domain name of the server ADSV contained in the HTTPS request. Then the player DPL executes steps S22 to S30 to establish a SSL link with the server ADSV and to get advertisement content from the latter.

Therefore, the verifications using a blacklist performed in steps S43, S47 and S52 by the ad-blocker ADBK are systematically made inoperative.

According to an embodiment, the dedicated player DPL is configured to detect the presence of an ad-blocker installed on the user device UDV, and to operate as a conventional player when no ad-blocker is detected.

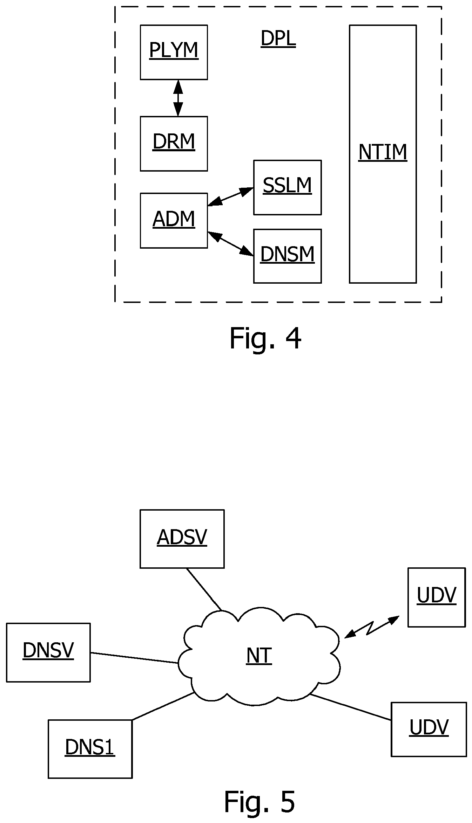

According to an embodiment shown in figure 4, the content player DPL includes a player module PLYM to display video content and/or play audio content, a network interface module NTIM to connect the player module PLYM to the network, and the previously disclosed SSL module SSLM and DNS module DNSM. The player DPL can include a digital right management module DRMM that enables access to protected media content, and an advertisement management module ADM that provides information related to the user actions to an advertisement measurement server, and that manages display of advertisements. The advertisement management module ADM uses the modules SSLM and DNSM and performs the steps of figures 2 and/or 3. The module DRMM enables particular DRM protected media content to be played by the player module PLYM, this media content being thus prevented to be played using another player that does not have the DRMM module.

Figure 5 illustrates user devices UDV that can access content and services from remote servers such as the servers ADSV, DNSV, DNS1 through communication networks NT such as the Internet. The user devices UDV can be for instance a mobile phone, a smartphone, a personal computer, a digital tablet or any equipment including or associated with communication and display functionalities, that can execute a program application such as the dedicated player DPL. Those two functionalities may also be provided by two or several devices, provided that those devices are associated and/or linked. The communications networks may include Internet Protocol networks, such as Internet, mobile or cellular networks, wireless networks, and any kind of network that can be used to establish a communication link between a user terminal and a remote server.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the methods disclosed herein are not limited to SSL and TLV protocols, but may involve other protocols for establishing protected transmission links through a network, based on encryption of the data exchanged using such link.

## Claims

1. A method for securing access from a computing device to media content available in a network (NT), the method comprising executing by a computing device (UDV) a dedicated player software application (DPL) to access the media content, the execution of the player software application comprising:
generating a content request to access a media content, the request containing a domain name of a content server (ADSV) providing the media content;
resolving the network domain name to determine a network address corresponding to the network domain name of the content server;
modifying the content request by replacing the domain name with the network address; and
providing the modified content request to transmit it to the content server,
wherein the resolution of the network domain name by the player software application (DPL) is performed using a resolving table defined in the player software application, or comprises:
establishing a first protected transmission link with a first resolving server (DNS1) defined in the player software application (DPL), using a list of trusted root certificates defined in the player software application;
transmitting a first resolving request containing the network domain name, through the first protected link to the first resolving server; and
receiving a first resolving response to the first resolving request through the first protected transmission link.

2. The method of claim 1, wherein, when no network address corresponding to the network domain name is found in the resolving table, the execution of the player software application (DPL) further comprises:
establishing the first protected transmission link with the first resolving server (DNS1), using the list of trusted root certificates;
transmitting the first resolving request through the first protected transmission link to the first resolving server; and
receiving the first resolving response to the first resolving request through the first protected transmission link.

3. The method of claim 1 or 2, wherein, when the resolving table or the first resolving response contains the network address of the content server (ADSV), the execution of the player software application (DPL) further comprising:
establishing a second protected transmission link with the content server, using the list of trusted root certificates and the network address of the content server; and
transmitting the modified content request to the content server through the second protected transmission link established with the content server.

4. The method of claim 1 to 3, wherein the execution of the player software application (DPL) further comprises receiving a requested content from the content server (ADSV) in response to the modified content request.

5. The method of claim 1 to 4, wherein the execution of the player software application (DPL) further comprises resolving a network domain name of the first resolving server (DNS1) to get a corresponding network address of the first resolving server, the resolution of the network domain name of the first resolving server being performed using the resolving table, or comprising:
transmitting a second resolving request containing the network domain name of the first resolving server to a second resolving server (DNSV); and
receiving a second resolving response to the second resolving request.

6. The method of claim 1 to 5, wherein the execution of the player software application (DPL) further comprises detecting an ad-blocking software (ADBK) installed on the computing device (UDV), and operating as a conventional player when no ad-blocking software is detected on the computing device.

7. The method of claim 1 to 6, wherein the first and/or second protected transmission links are established using the protocol SSL (Secure Sockets Layer) and/or TLV (Transport Layer Security).

8. A computing device connected to a network for accessing media contents provided by remote servers (ADSV), and having installed thereon a dedicated player (DPL) configured to implement the steps of the method according to one of claims 1 to 7.

9. The computing device of claim 8, wherein the dedicated player (DPL) comprises a domain name resolving module (DNSM).

10. The computing device of one of claims 8 and 9, wherein the dedicated player (DPL) comprises a module (SSLM) storing a list of trusted root certificates and configured to establish a protected link with a remote server (DNS1, ADSV).

11. The computing device of one of claims 8 to 10, wherein the dedicated player (DPL) comprises a module (DRMM) for enabling the dedicated player to access protected media contents.

12. A computer program product directly loadable into an internal memory of a computer and comprising code portions which when executed by a computer (UDV) connected to a network (NT), configure the computer to implement the steps of the method according to one of claims 1 to 7.
